# EUROPEAN PATENT SPECIFICATION

(11) **EP 4 021 866 B1**
(45) Date of publication and mention of the grant of the patent: **22.11.2023**
(21) Application number: 20761293.8
(22) Date of filing: 31.08.2020
(51) Int. Cl.: C04B 26/06, C04B 40/06, C09D 5/34, C09K 3/12, C08F 4/40, C04B 103/44, C04B 111/00

(54) **ACRYLIC-BASED INJECTION MATERIALS WITH IMPROVED CURING PROPERTIES**
INJEKTIONSMATERIALIEN AUF ACRYLATBASIS MIT VERBESSERTEN HÄRTUNGSEIGENSCHAFTEN
MATÉRIAUX D'INJECTION À BASE ACRYLIQUE PRÉSENTANT DE MEILLEURES PROPRIÉTÉS DE DURCISSEMENT

(30) Priority: 29.08.2019 EP 19194484
(43) Date of publication of application: 06.07.2022
(73) Proprietor: Sika Technology AG, 6340 Baar (CH)
(72) Inventor: HAUFE, Markus, 8048 Zürich (CH); GUT, Cyrill, 8820 Wädenswil (CH); BAKALLI, Mirdash, 8046 Zürich (CH)
(74) Representative: Sika Patent Attorneys
(86) International application number: PCT/EP2020/074223
(87) International publication number: WO 2021/038104

(56) References cited:
- EP-A1- 3 222 642
- WO-A1-2013/033791
- US-A- 4 168 614
- US-A- 5 817 016
- US-A- 6 066 279

## Description

### Technical field

The present invention relates to hydrogel forming compositions and use thereof for sealing and filling cracks, voids, flaws, and cavities in concrete structures and for soil stabilization or ground consolidation.

### Background of the invention

Aqueous hydrogel forming compositions are used in construction industry as injection materials. These are commonly used for sealing and filling of cracks, voids, flaws, and cavities in concrete structures and for soil stabilization or ground consolidation. Hydrogels constitute a group of polymeric materials having a hydrophilic structure, which renders them capable of holding large amounts of water in their three-dimensional networks. They are produced by polymerizing and cross-linking of water-soluble compounds, such as acrylic monomers, oligomers, and pre-polymers, in aqueous solutions or by contacting superabsorbent polymers with water. A hydrogel forming composition typically comprises, in addition to the water-soluble polymerizable compounds, a free-radical initiator system, and water. Water-soluble acrylic compounds are preferred since these are known to form stable hydrogels upon polymerization and cross-linking in aqueous solutions. Suitable free-radical initiator systems for hydrogel forming compositions include, in particular, redox-type initiator systems, which do not require activation by heating. Redox-type initiator systems are based on use of a reducing agent and an oxidizing agent, which react producing intermediate radicals even at low temperatures. Redox-type initiators are preferred over thermally activated initiator systems due to their water-solubility and fast and constant liberation of initiating radicals in the aqueous phase.

Commercially available injection materials are typically provided in form of multiple-component compositions wherein the constituents of the hydrogel forming composition are provided packaged in physically separated compartments of a single package or in separate packages. Providing the injection materials as a single-component storage stable composition is typically not possible due to the reactiveness of the constituents. Furthermore, only a portion of the amount of water required to prepare a hydrogel forming composition is typically contained in the multiple-component composition in order to minimize the transportation costs. A hydrogel forming composition is prepared at the construction site by mixing the components of the injection material with each other and with a required amount of water. The obtained mixture is then pumped or injected into the concrete structure or into the soil, where it forms a hydrogel by free-radical initiated polymerization.

Redox-type initiator systems composed of a free-radical initiator and an amine-based catalyst (reducing agent) for the free-radical initiator have been widely used in acrylic-based injection materials. Commonly used free-radical initiators include, for example, organic and inorganic hydroperoxides, organic and inorganic peroxides, such as peroxydisulfates and persulfate salts. Typically used amine catalysts include, in particular, alkanolamines and ethoxylated alkanolamines. Due to the catalytically induced decomposition reactions taking place in redox-type initiator systems, the rate of the decomposition reactions depends very much on the concentration of the other constituents present in the reaction medium as well as on temperature and pH of the reaction medium. Commonly used amine catalysts have been found to show only limited reactivity and activating certain types of acrylic-based injection materials has been found out to be not feasible or only feasible by using very high amounts of these catalysts.

EP 3222642 A1 discloses a single- or multiple-component composition, which forms mixing with water a (meth)acrylic hydrogel. Said composition comprises at least one water soluble at room temperature liquid (meth)acrylic compound supported on a solid carrier and/or an aqueous solution of at least one at room temperature solid or liquid (meth)acrylic compound, a free-radical initiator, and optionally a catalyst for the initiator,

It is thus desirable to provide a novel type of catalyst for free-radical initiators, which can be used for increasing the rate of curing of State-of-the-Art hydrogel forming compositions, in particular acrylic-based injection materials.

### Summary of the invention

The object of the present invention is to provide a hydrogel forming composition having an easily adjustable and shortened gelling time compared to State-of-the-Art acrylic-based injection materials.

The subject of the present invention is a hydrogel forming composition as defined in claim 1.

It was surprisingly found out that certain amine compounds can be used for acceleration of free-radical initiated polymerization reactions in hydrogel forming compositions comprising at least one water-soluble (meth)acrylic compound and at least one free-radical initiator.

One of the advantages of the hydrogel forming composition of the present invention is that the use of the novel type of amine catalyst does not require any amendments on the type and amount of the other constituents of the hydrogel forming composition. Consequently, the gelling time of the State-of-the-Art acrylic-based injection materials can be easily adjusted by using small amounts of the amine catalyst.

Another advantage of the hydrogel forming composition of the present invention is that the use of the novel type of amine catalyst does not increase the production costs of the hydrogel forming composition. In addition, the use of the novel type of amine catalyst has been found out to enable decrease of the production costs of injection materials without having a negative effect on application relevant properties such as gel consistency and swelling properties. Other subjects of the present invention are presented in other independent claims. Preferred aspects of the invention are presented in the dependent claims.

### Detailed description of the invention

The subject of the present invention is a hydrogel forming composition comprising:
a) 5 - 70 wt.-% of at least one water-soluble (meth)acrylic compound as defined in claim 1,
b) At least one free radical initiator,
c) At least one catalyst for free radical formation, and
d) 20 - 75 wt.-% of water, all proportions being based on the total weight of the hydrogel forming composition,

wherein the at least one catalyst for free radical formation is an amine compound of formula (l) 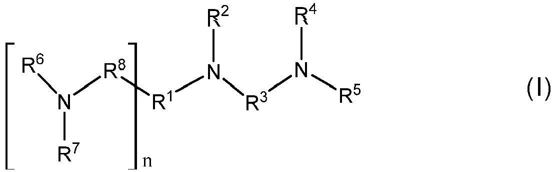 wherein
R¹ to R⁵ represent independently from each other linear or branched alkyl groups having 1 to 6 carbon atoms and optionally having one or more oxygen atoms and n has a value of 0;
or R¹ to R⁸ represent independently from each other linear or branched alkyl groups having 1 to 6 carbon atoms and optionally having one or more oxygen atoms and n has a value of 1;
or R¹, R², R⁷, and R⁸ together form a 5- or 6-membered ring structure with the two nitrogen atoms, R³ to R⁶ represent independently from each other linear or branched alkyl groups having 1 to 6 carbon atoms and optionally having one or more oxygen atoms, and n has a value of 1.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "hydrogel" designates a polymeric material that exhibits the ability to swell and retain a significant fraction of water within its structure, but will not dissolve in water. The ability of hydrogels to absorb water arises from hydrophilic functional groups attached to the polymeric backbone, while their resistance to dissolution arises from cross-links between polymer chains. The polymer chains can be cross-linked via covalent bonds (chemical gel) or via non-covalent bonds such as ionic interaction or hydrogen bonds (physical gel).

The term "water-soluble compound", for example a water-soluble (meth)acrylic compound, designates compounds having a solubility of at least 5 g/100 g water, at a temperature of 20°C.

The term "gelling time" designates a time frame within a hydrogel is formed once the constituents of a hydrogel forming composition have been mixed with each other.

The "amount or content of at least one component X" in a composition, for example "the amount of the at least one acrylic compound" refers to the sum of the individual amounts of all acrylic compounds contained in the composition. For example, in case the at least one acrylic compound comprises 20 wt.-% of the total weight of the composition, the sum of the amounts of all acrylic compounds contained in the composition equals 20 wt.-%.

The term "room temperature" designates a temperature of 23°C.

The hydrogel forming composition of the present invention comprises at least one amine compound of formula (l) as a catalyst for the at least one free radical initiator.

According to one or more embodiments, the at least one catalyst for free radical formation is an amine compound of formula (l), wherein
R³ represents an ethyl group or a diethyl ether group, R⁴ represents a methyl group or an ethyl hydroxide group, R⁵ represents a methyl group, and n has a value of 0;
or R³ represents an ethyl group or a diethyl ether group, R⁴ represents a methyl group or an ethyl hydroxide group, R⁵ and R⁶ represent methyl groups, n has a value of 1, and R¹, R², R⁷, and R⁸ either represent independently from each other linear or branched alkyl groups having 1 to 6 carbon atoms, and optionally having one or more oxygen atoms or R¹, R², R⁷, and R⁸ form a 5- or 6-membered ring structure with the nitrogen atoms.

According to one or more further embodiments, the at least one catalyst for free radical formation is an amine compound of formula (l), wherein
R³ represents an ethyl group or a diethyl ether group, R⁴ represents a methyl group or an ethyl hydroxide group, R⁵ represents a methyl group, and n has a value of 0;
or R³ represents an ethyl group or a diethyl ether group, R⁴ represents a methyl group or an ethyl hydroxide group, R⁵ and R⁶ represent methyl groups, n has a value of 1, and R² and R⁷ either represent methyl groups and R¹ and R⁸ together form a linear or branched alkyl group having 2 to 6 carbon atoms, preferably an ethyl group or R¹, R², R⁷, and R⁸ together form a 5- or 6-membered ring structure with the two nitrogen atoms.

According to one or more embodiments, the at least one catalyst for free radical formation is selected from the group consisting of trimethylaminoethyl ethanolamine, N,N,N',N'-tetramethylethylene diamine, pentamethyldiethylene triamine, 1-methyl-4-(2-dimethylaminoethyl)piperazine, and bis (2-(N,N-dimethylamino)ethyl) ether, preferably from the group consisting of trimethylaminoethyl ethanolamine, N,N,N',N'-tetramethylethylene diamine, and pentamethyldiethylene triamine.

According to one or more further embodiments, the at least one catalyst for free radical formation is selected from the group consisting of trimethylaminoethyl ethanolamine, pentamethyldiethylene triamine, 1-methyl-4-(2-dimethylaminoethyl)piperazine, and bis (2-(N,N-dimethylamino)ethyl) ether, preferably from the group consisting of trimethylaminoethyl ethanolamine and pentamethyldiethylene triamine.

The preferred amount of the at least one catalyst for free radical formation depends on the desired curing rate of the hydrogel forming composition. Preferably, the at least one catalyst for free radical formation comprises at least 0.05 wt.-%, more preferably at least 0.1 wt.-% of the total weight of the hydrogel forming composition. According to one or more embodiments, the at least one catalyst for free radical formation is present in the hydrogel forming composition in an amount of 0.05 - 5.0 wt.-%, preferably 0.1 - 3.5 wt.-%, more preferably 0.1 - 2.5 wt.-%, even more preferably 0.15 - 1.5 wt.-%, still more preferably 0.2 - 1.25 wt.-%, such as 0.25 - 1.0 wt.-%, preferably 0.3 - 1.0 wt.-%, based on the total weight of the hydrogel forming composition.

The hydrogel forming composition of the present invention further comprises at least one water-soluble (meth)acrylic compound as defined in claim 1.

The term "(meth)acrylic" designates in the present disclosure methacrylic or acrylic. Accordingly, (meth)acryloyl designates methacryloyl or acryloyl. A (meth)acryloyl group is also known as (meth)acryl group. The term "(meth)acrylic compound" designates compounds having one or more (meth)acryloyl groups. These include mono- di-, tri- etc. functional (meth)acrylic compounds.

The amount of the at least one water-soluble (meth)acrylic compound in the hydrogel forming composition according to the invention is at least 5 wt.-%, more preferably at least 10 wt.-% of the total weight of the hydrogel forming composition. According to the invention, the at least one water-soluble (meth)acrylic compound is present in the hydrogel forming composition in an amount of 5 - 70 wt.-%, more preferably 10 - 65 wt.-%, even more preferably 15 - 60 wt.-%, still more preferably 20 - 60 wt.-%, most preferably 25 - 55 wt.-%, based on the total weight of the hydrogel forming composition. According to one or more further embodiments, the at least one water-soluble (meth)acrylic compound is present in the hydrogel forming composition in an amount of 15 - 75 wt.-%, preferably 25 - 70 wt.-%, more preferably 35 - 65 wt.-%, even more preferably 40 - 65 wt.-%, based on the total weight of the hydrogel forming composition.

The at least one water-soluble (meth)acrylic compound may be a monomer, an oligomer or a polymer and it may have a molecular weight or, if it is an oligomer or polymer having a molecular weight distribution, an average molecular weight (M_{w}), for example, of not more than 12,000 g/mol, preferably not more than 8,000 g/mol, more preferably not more than 4,000 g/mol.

The term "molecular weight" refers in the present disclosure to the molar mass (g/mol) of a molecule or a part of a molecule, also referred to as "moiety". The term "average molecular weight" refers to the weight average molecular weight (M_{w}) of an oligomeric or polymeric mixture of molecules or moieties. The molecular weight can be determined by conventional methods, preferably by gel permeation chromatography (GPC) using polystyrene as standard, styrenedivinylbenzene gel with porosity of 100 Angstrom, 1000 Angstrom and 10000 Angstrom as the column, and tetrahydrofurane as a solvent, at a temperature of 35°C.

Preferably, the at least one water-soluble (meth)acrylic compound contained in the hydrogel forming composition has a solubility of at least 5 g/100 g water, more preferably at least 10 g/100 water, at a temperature of 20 °C. The solubility of a compound in water can be measured as the saturation concentration, where adding more compound does not increase the concentration of the solution, i.e. where the excess amount of the substance begins to precipitate. The measurement for water-solubility of a compound in water can be conducted using the standard "shake flask" method as defined in the OECD test guideline 105 (adopted 27^{th} July, 1995).

According to one or more embodiments, the at least one (meth)acrylic compound is completely soluble in water, i.e. water and the at least one (meth)acrylic compound form a homogeneous phase at any mixing ratio.

(Meth)acrylic compounds which are not water-soluble are preferably not used as the main polymerizable compound in the hydrogel forming composition of the present invention since they cause separation of the water from the (meth)acrylic polymer obtained from the polymerization of the (meth)acrylic compounds. The hydrogel forming composition may contain water-insoluble (meth)acrylic compounds but preferably only in minor amounts, such as not more than 5 wt.-%, more preferably not more than 1 wt.-%, based on the total weight of the hydrogel forming composition.

The at least one water-soluble (meth)acrylic compound may have one, two or more than two (meth)acryloyl groups. (Meth)acrylic compounds having only one (meth)acryloyl group are preferred. According to one or more embodiments, the amount of (meth)acrylic compounds having more than one (meth)acryloyl group is not more than 10 wt.-%, preferably not more than 5 wt.-%, more preferably not more than 2.5 wt.-%, based on the total weight of the hydrogel forming composition.

Suitable water-soluble (meth)acrylic compounds include, for example, hydroxyl-functional (meth)acrylates, carboxyl-functional (meth)acrylic compounds, polyether (meth)acrylates, (meth)acrylamides, salts of carboxyl-functional (meth)acrylic compounds, (meth)acrylates having a sulfonic acid group, (meth)acrylamides having a sulfonic acid group, salts or esters of (meth)acrylates having a sulfonic acid group, salts of (meth)acrylamides having a sulfonic acid group, (meth)acrylates having a quaternary nitrogen containing group, and (meth)acrylamides having a quaternary nitrogen containing group.

The term "hydroxyl-functional (meth)acrylate" designates in the present disclosure (meth)acrylates having one or more hydroxyl groups. Examples of suitable water-soluble hydroxyl-functional (meth)acrylates include, for example, hydroxyethylmethacrylate (HEMA), hydroxyethylacrylate (HEA), hydroxypropylmethacrylate (HPMA), hydroxypropylacrylate (HPA), hydroxybutylmethacrylate (HBMA) and hydroxybutylacrylate (HBA).

The term "carboxyl-functional (meth)acrylic compound" designates in the present disclosure (meth)acrylic compounds having one or more carboxylic groups such as, for example, (meth)acrylic acids and (meth)acrylic acid esters having one or more additional carboxylic groups in the side chain of the (meth)acrylic acid ester. Examples of suitable carboxyl-functional water-soluble (meth)acrylic compounds include, for example, methacrylic acid, acrylic acid, adducts of hydroxyethylmethacrylate with anhydrides, itaconic acid, maleic acid, and adducts of maleic acid anhydride.

The cation for said salts of carboxyl-functional (meth)acrylic compounds may be any common cation used in such compounds. Suitable salts include metal salts, in particular alkali metal salts or earth alkaline metal salts of carboxyl-functional (meth)acrylic compounds, such as sodium salts, potassium salts or magnesium salts, or ammonium salts of carboxyl-functional (meth)acrylic compounds. Examples of particularly suitable salts of carboxyl-functional (meth)acrylic compounds include salts of (meth)acrylic acid, for example, sodium acrylate, sodium methacrylate, potassium acrylate, potassium methacrylate, magnesium diacrylate, and magnesium dimethacrylate. Preferred salts of carboxyl-functional (meth)acrylic compounds include magnesium diacrylate and magnesium dimethacrylate.

The term "polyether (meth)acrylate" designates in the present disclosure polyethers having one, two, three or more (meth)acrylate groups. Particularly suitable polyether (meth)acrylates include, for example, polyethylene glycol (PEG) and methoxy polyethylene glycol (MPEG) copolymer (meth)acrylates, in particular block copolymer (meth)acrylates, such as polyethylene glycol-polypropylene glycol (PEG-PPG) copolymer (meth)acrylates, methoxy polyethylene glycol- polypropylene glycol (MPEG-PPG) copolymer (meth)acrylates, and methoxy polypropylene glycol-polyethylene glycol (MPPG-PEG) copolymer (meth)acrylates, as well as ethoxylated trimethylolpropane and ethoxylated pentaerythritol (meth)acrylates. When the polyether is a PEG-PPG copolymer or a block copolymer, respectively, the amount of PEG therein is preferably at least 30 wt.-%, based on the total weight of the polyether, in order to achieve suitable water solubility. Particularly suitable polyether (meth)acrylates include those having one or two (meth)acrylate groups.

Suitable polyether (meth)acrylates also include polyethers containing further structural units, such as urethane groups, for example oligomers or pre-polymers obtained by reaction of polyetherpolyols, in particular polyetherdiols, or polyethermonools with compounds having two functional groups, which are reactive with hydroxyl groups, such as polyisocyanates. For instance, polyether (meth)acrylates may be obtained by reaction of polyetherpolyols or polyethermonools, such as PEG, MPEG, PEG-PPG or MPEG-PPG or MPPG-PEG block copolymers, with polyisocyanates to obtain an isocyanate-functional product which is subsequently reacted with a hydroxyl-functional (meth)acrylic compound, such as hydroxyethyl methacrylate (HEMA). With respect to water solubility, also in this case PEG/PPG blocks preferably have an amount of PEG of at least 30 wt.-%, based on the total weight of the polyether block, in order to achieve suitable water solubility.

Examples of particularly suitable water-soluble polyether (meth)acrylates and polyether di(meth)acrylates include, for example, PEG-di(meth)acrylates such as PEG 200 dimethacrylate, PEG 400 dimethacrylate, PEG 600 dimethacrylate, PEG 2000 dimethacrylate, MPEG-(meth)acrylates such as MPEG 350 (meth)acrylate, MPEG 550 (meth)acrylate, MPEG 1000 (meth)acrylate, and MPEG 2000 (meth)acrylate. These are commercially available, for example, under the trade name of Sartomer^{®} (from Sartomer, France), for example, as Sartomer^{®} SR252 (polyethylene glycol (600) dimethacrylate) and under the trade name of Bisomer^{®} (from Geo Specialty Chemicals, USA), for example, as Bisomer^{®} MPEG-350MA (methoxy polyethyleneglycol methacrylate).

Examples of water-soluble ethoxylated trimethylolpropane (meth)acrylates and ethoxylated pentaerythritol (meth)acrylates include ethoxylated trimethylolpropane tri(meth)acrylate and ethoxylated pentaerythritol tetra(meth)acrylate. These are commercially available, for example, under the trade name of Sartomer^{®}, such as Sartomer^{®} SR415, Sartomer^{®} SR454, and Sartomer^{®} SR494 (all from Sartomer, France).

Examples of suitable water-soluble (meth)acrylates or (meth)acrylamides having a sulfonic acid group, and salts or esters thereof include, for example, 2-acrylamido-2-methylpropane sulfonic acid (ATBS^{®}), sodium salt of 2-acrylamido-2-methylpropane sulfonic acid (Na-ATBS^{®}), and sulfatoethyl methacrylate.

Examples of suitable water-soluble (meth)acrylates and (meth)acrylamides having a quaternary nitrogen containing group include, for example, 2-trimethylammoniumethyl methacrylate chloride and 3-trimethylammoniumpropyl methacrylamide chloride.

Use of (meth)acrylamides as the at least one water-soluble (meth)acrylic compound may not be preferred due to their well-known toxicological potential. It is however possible that the hydrogel forming composition comprises low amounts of (meth)acrylamides since some of these compounds are also used as catalysts for free radical formation. According to one or more embodiments, the hydrogel forming composition contains not more than 10 wt.-%, preferably not more than 5 wt.-%, more preferably not more than 2.5 wt.-%, even more preferably not more than 1.5 wt.-%, still more preferably not more than 0.5 wt.-%, such as not more than 0.25 wt.-%, most preferably not more than 0.1 wt.-% of (meth)acrylamides, based on the total weight of the hydrogel forming composition.

The hydrogel forming composition may further comprise at least one water-soluble co-monomer. These co-monomers are preferably co-polymerizable with (meth)acrylic compounds, in particular with (meth)acrylic monomers. Preferably, the at least one water-soluble co-monomer has a solubility of at least 5 g/100 g water, more preferably at least 10 g/100 g water, at temperature of 20°C. It goes without saying that the at least one water-soluble co-monomer is different from the at least one water-soluble (meth)acrylic compound as discussed above. The at least one water-soluble co-monomer is preferably a vinyl compound, in particular a vinyl compound selected from the group consisting of vinyl esters, divinyl esters, vinyl ethers, and divinyl ethers, preferably selected from the group consisting of hydroxyl-functional vinyl ethers and hydroxyl-functional divinylethers.

The at least one water-soluble co-monomer, if used, is preferably contained in relatively low amounts in the hydrogel forming composition compared to the amount of the at least one water-soluble (meth)acrylic compound. It may be preferable that the amount of the at least one water-soluble co-monomer in the hydrogel forming composition comprises not more than 15 wt.-%, more preferably not more than 10 wt.-%, even more preferably not more than 5 wt.-% of the sum of the amounts of the at least one water-soluble (meth)acrylic compound and the at least one water-soluble co-monomer.

According to the invention, the at least one water-soluble (meth)acrylic compound is selected from the group consisting of hydroxyethylmethacrylate (HEMA), hydroxypropylmethacrylate (HPMA), methoxy polyethylene glycol methacrylate (MPEG-MA), polyethylene glycol dimethacrylate (PEG-DMA), maleic acid, itaconic acid, sodium acrylate, sodium methacrylate, potassium acrylate, potassium methacrylate, magnesium acrylate, potassium salt of 3-sulfopropylacrylat, 2-acrylamido-2-methylpropane sulfonic acid (ATBS^{®}), and sodium salt of 2-acrylamido-2-methylpropane sulfonic acid (Na-ATBS^{®}).

According to one or more embodiments, the at least one water-soluble (meth)acrylic compound is a hydroxyl-functional (meth)acrylic compound, preferably selected from the group consisting of hydroxyethylmethacrylate (HEMA), hydroxyethylacrylate (HEA), hydroxypropylmethacrylate (HPMA), hydroxypropylacrylate (HPA), hydroxybutylmethacrylate (HBMA) and hydroxybutylacrylate (HBA).

According to one or more embodiments, the hydrogel forming composition comprises at least one first water-soluble (meth)acrylic compound selected from the group consisting of hydroxyl-functional (meth)acrylates, carboxyl-functional (meth)acrylic compounds, and polyether (meth)acrylates and at least one second water-soluble (meth)acrylic compound selected from the group consisting of salts of a carboxyl functional (meth)acrylic compound, (meth)acrylates having a sulfonic acid group, (meth)acrylamides having a sulfonic acid group, salts or esters of (meth)acrylates having a sulfonic acid group, salts of (meth)acrylamides having a sulfonic acid group, (meth)acrylates having a quaternary nitrogen containing group, and (meth)acrylamides having a quaternary nitrogen containing group.

The at least one free-radical initiator contained in the hydrogel forming composition serves to initiate polymerization reactions of the (meth)acrylic compounds. These initiators are known to those skilled in the art. The initiator may be, for example, an organic or inorganic hydroperoxide, an organic or inorganic peroxide such as a peroxydisulfate or persulfate salt, an azo compound, or any other material, which is known to the skilled person for being capable of generating radicals. Both water-soluble and water-insoluble free-radical initiators, for example free-radical initiators in form of an aqueous dispersion, can in principle be used. Preferably, the at least one free-radical initiator is at least partially soluble in water. According to one or more embodiments, the at least one free-radical initiator has a solubility at a temperature of 20°C of at least 1.5 g/100 g water, preferably at least 2.0 g/100 g water, more preferably at least 2.5 g/100 g water.

According to one or more embodiments, the at least one free-radical initiator is selected from the group consisting of sodium persulfate (NAPS), potassium persulfate, ammonium persulfate, hydrogen peroxide, benzoyl peroxide, cumene hydroperoxide, tert-butyl hydroperoxide, and diisopropylbenzene hydroperoxide, preferably selected from the group consisting of sodium persulfate (NAPS), potassium persulfate, and ammonium persulfate.

Preferably, the at least one free-radical initiator comprises at least 0.05 wt.-%, more preferably at least 0.1 wt.-% of the total weight of the hydrogel forming composition. According to one or more embodiments, the at least one free-radical initiator is present in the hydrogel forming composition in an amount of 0.05 - 5.0 wt.-%, preferably 0.1 - 3.5 wt.-%, more preferably 0.1 - 2.5 wt.-%, even more preferably 0.1 - 1.5 wt.-%, still more preferably 0.15 - 1.0 wt.-%, based on the total weight of the hydrogel forming composition.

The preferred amount of water in the hydrogel forming composition depends on the intended use of the hydrogel forming composition. For example, in injection applications, the viscosity of the hydrogel forming composition is typically lowered by increasing the amount of water in order to enable the injection of the composition through narrow holes and cracks of concrete structures. According to one or more embodiments, the weight ratio of the amount of the at least one water-soluble (meth)acrylic compound to the amount of water in the hydrogel forming composition is in the range of 0.1:1 to 5:1, preferably, 0.1:1 to 3:1, more preferably 0.2:1 to 2:1.

According to one or more embodiments, the hydrogel forming composition comprises 25 - 65 wt.-%, even more preferably 35 - 55 wt.-% of water, based on the total weight of the hydrogel forming composition.

The hydrogel forming composition can further comprise additives, such as one or more fillers. These may be added to the hydrogel forming composition in order to improve the mechanical properties of the hydrogel obtained from the hydrogel forming composition or in order to reduce the production costs of the hydrogel by replacing portion of the more expensive constituents with low cost fillers. It may be preferred that the filler has a relative low solubility in water, such as not more than 0.5 g/100 g water, preferably not more than 0.1 g/100 g water, at a temperature of 20 °C.

Suitable fillers include solid particulate fillers having a median particle size d₅₀ in the range of 0.1 - 350 µm, preferably of 0.5 - 250 µm, more preferably 1 - 200 µm, even more preferably 1 - 150 µm, still more preferably 1 - 100 µm, in particular 1 - 50 µm. The term median particle size d₅₀ refers in the present disclosure to a particle size below which 50 % of all particles by volume are smaller than the d₅₀ value. The term "particle size" refers to the area-equivalent spherical diameter of a particle. The particle size distribution can be measured by laser diffraction according to the method as described in standard ISO 13320-1:2009.

Suitable fillers to be used in the hydrogel forming composition include, for example, organic polymer fillers, inert mineral fillers, and mineral binders.

The term "organic polymer filler" designates in the present disclosure fillers comprising or consisting of organic polymers. Suitable organic polymers for the organic filler include, for example, polyethylene, polypropylene, poly(meth)acrylates, copolymers of (meth)acrylates, polyamides, polyesters, polysulfones, polycarbonates, polystyrene, chloroprene rubber, nitrile rubber, styrene butadiene rubber, polyvinyl acetate, styrene butadiene copolymers, and polyurethane.

Preferred organic polymer fillers include poly(meth)acrylates, copolymers of (meth)acrylates and styrene, copolymers of (meth)acrylates and vinyl esters of tertiary carboxylic acids, copolymers and terpolymers of (meth)acrylates, vinyl esters of tertiary carboxylic acids and vinyl acetate, copolymers of styrene and butadiene, copolymers of vinyl acetate and (meth)acrylates, copolymers of vinyl acetate and ethylene; copolymers and terpolymers of vinyl acetate, ethylene and vinyl ester, and polyurethane.

Suitable organic polymer fillers provided in form of water-redispersible polymer powder are commercially available, for example, under the trade name of Vinnapas^{®} (from Wacker Chemie), such as Vinnapas^{®} 3000 series, Vinnapas^{®} 4000 series, Vinnapas^{®} 5000 series, Vinnapas^{®} 7000 series, and Vinnapas^{®} 8000 series; and under the trade name of Axilat^{®} (from Momentive Specialty Chemicals), such as Axilat^{®} HP 8000 series, Axilat^{®} UP series, Axilat^{®} PSB 150, and Axilat^{®} PAV series.

Suitable organic polymer fillers provided in form of aqueous polymer dispersions are commercially available, for example, under the trade name of Vinnapas^{®} (from Wacker Chemie), such as Vinnapas^{®} 500 series, Vinnapas^{®} CA series, Vinnapas^{®} DP and DPN series, Vinnapas^{®} DPX 271, and Vinnapas^{®} EAF, EF, EP, and EZ series; and under the trade name of Axilat^{®} (from Momentive Specialty Chemicals ), such as Axilat^{®} L 8000 series, such as Axilat^{®} PR series, Axilat^{®} 4204, and Axilat^{®} DS series.

The term "inert mineral filler" designates in the present disclosure mineral fillers, which unlike mineral binders, are not reactive, i.e. do not undergo a hydration reaction in the presence of water. Suitable inert mineral fillers include, for example, quartz, granite, ground or precipitated calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silicas, such as crystalline silica, precipitated silica, pyrogenic silica, and fused silica, calcium silicate, phonolite, aerogels, glass beads, hollow glass spheres, ceramic spheres, bauxite, graphite, and zeolites.

The term "mineral binder" designates in the present document mineral binders, which in the presence of water react in a hydration reaction under formation of solid hydrates or hydrate phases. Suitable mineral binders include, for example, hydraulic mineral binders, such as cement, cement clinker and hydraulic lime; non-hydraulic mineral binders, such as non-hydraulic lime and gypsum; pozzolanic mineral binders, such as natural pozzolans, for example trass and artificial pozzolans, for example fly ash and silica fume.

The one more fillers, if used, are preferably present in the hydrogel forming composition in an amount of not more than 45 wt.-%, preferably not more than 40 wt.-%, more preferably not more than 35 wt.-%, even more preferably not more than 30 wt.-%, based on the total weight of the hydrogel forming composition.

Apart from the above mentioned constituents, the hydrogel forming composition may optionally contain one or more further additives, which are common in this field. Examples of these include color dyes, and water-soluble diluents such as polyethylene glycol.

According to one or more embodiments, the hydrogel forming composition has an open time at a temperature of 23 °C of not more than 240 minutes, preferably not more than 120 minutes, more preferably not more than 90 minutes, even more preferably not more than 60 minutes, still more preferably not more than 45 minutes. It may be preferred that the hydrogel forming composition has an open time at a temperature of 23 °C in the range of 30 seconds - 120 minutes, more preferably 30 seconds - 90 minutes, even more preferably 1 - 60 minutes, still more preferably 5-30 minutes. The term "open time" designates in the present disclosure a time period for which a hydrogel forming composition can still be processed, such as injected into a crack of a concrete structure. The end of the open time is usually associated with such an increase in viscosity of the composition that further processing of the composition is no longer possible.

According to one or more embodiments, the hydrogel forming composition has a viscosity, measured with a Brookfield viscometer at temperature of 23°C with a rotational speed of the viscometer in the range of 150 - 200 revolutions per minute, of not more than 500 mPa s, preferably not more than 200 mPa s, more preferably not more than 150 mPa s. The viscosity of the hydrogel forming composition is measured immediately after the complete dissolution of the constituents a) to c) in water.

The preferences given above for the at least one water-soluble (meth)acrylic compound, the at least on free radical initiator, and for the at least one catalyst for free radical formation apply equally for all subjects of the present invention unless stated otherwise.

Another subject of the present disclosure is a multiple-component composition comprising the constituents a) to c) of the hydrogel forming composition of the present invention.

The term "component" refers here to a part of the composition, which contains one or more constituents of the multiple-component composition. The components of the multiple-component composition are provided as physically separated from each other in order to prevent premature reaction of the constituents. Typically, the components are stored in separate air- and moisture impermeable packages or compartments of a single package and they are mixed together and optionally with other components at the time of use or immediately before the time of use of the multiple-component composition to obtain a hydrogel forming composition.

The constituents of the multiple-component composition can in principle be provided in different components in any conventional way. It is, however, preferable that the at least the free radical initiator and the at least one catalyst for free radical formation are not present in the same component in order to prevent the premature reaction of these constituents and to provide a storage-stable composition. The term "storage-stable composition" refers here to a composition which, in particular in the absence of moisture, can be kept in a suitable package or facility, such as a drum, a pouch or a cartridge, for example, for a period of several months up to one year or more, without suffering any service-relevant change in the application properties and/or reactivity of the composition.

According to one option of the present disclosure, the multiple-component composition is a two-component composition composed of a first component K1 and a second component K2, wherein the at least one free radical initiator and the at least one catalyst for free radical formation are not present in the same component. The components K1 and K2 can be provided in two separate packages or in one package having two chambers that are separated from each other. Suitable two-chamber packaging formats include, for example, dual cartridges such as twin or coaxial cartridges, multi-chamber poaches or bags with adapters.

According to another preferred option, the multiple-component composition is a three-component composition composed of a first component K1, a second component K2 and a third component K3, wherein the at least one water-soluble (meth)acrylic compound is present in the first component K1 and the at least one free radical initiator and the at least one catalyst for the free radical formation are present in the second and third components K2 and K3, respectively. The components K1-K3 can be provided in separate packages or in one package having three chambers that are separated from each other

The hydrogel forming composition of the present invention can be obtained by mixing the components of the multiple-component composition and the constituents contained therein with each other and with such an amount of water that in the thus resulting mixture, the weight ratio of the total amount of the water-soluble (meth)acrylic compounds to water is in the range of 0.1:1 to 5:1, preferably, 0.1:1 to 3:1, more preferably 0.2:1 to 2:1.

The water required for preparing the hydrogel forming composition can be contained in one or several components of the multiple-component composition. It is, however, preferred that at least a significant part of the water needed for preparing the hydrogel forming composition is not contained in the multiple-component composition, but it is mixed with the multiple-component composition when used for preparing the hydrogel forming composition.

Optionally, the multiple-component composition further comprises water, wherein the amount of water is not more than 50 wt.-%, preferably not more than 35 wt.-%, more preferably not more than 15 wt.-%, more preferably not more than 5 wt.-% of the amount of water contained in the hydrogel forming composition of the present invention.

Optionally, the multiple-component composition further comprises water, wherein the amount of water is not more than 30 wt.-%, preferably not more than 20 wt.-%, more preferably not more than 15 wt.-%, even more preferably not more than 10 wt.-% of water, based on the total weight of the multiple-component composition.

The multiple-component composition may optionally comprise, in addition to the constituents as described above, one or more inhibitors. Inhibitors are often added to commercially available (meth)acrylic compounds in order to avoid spontaneous polymerization and/or to adjust open times and reaction times, respectively. Examples of suitable inhibitors include butylhydroxytoluene (BTH), hydroquinone (HQ), monomethyl ether hydroquinone (MEHQ), PTZ (phenothiazine), and 4-hydroxy-2,2,6,6-tetramethylpiperidin-1-oxyl (4-hydroxy-TEMPO).

Also disclosed is a hydrogel obtainable by a method comprising steps of:
i) Providing a multiple-component composition of the present invention,
ii) Mixing the components of the multiple-component composition with water such that in the thus resulting mixture, the weight ratio of the amount of the at least one water-soluble (meth)acrylic compound to the amount of water is in the range of 0.1:1 to 5:1, preferably, 0.1:1 to 3:1, more preferably 0.2:1 to 2:1, and
iii) Letting the thus obtained mixture form the hydrogel.

Suitable means for conducting the mixing step ii) include static mixers and dynamic mixers, in particular container-stirrer type mixers such as rotor-stator type mixers, dissolver mixers, colloidal mixers and other high shear mixers. Mixing can also be conducted by manual mixing, especially in case of low viscous mixtures.

After mixing the constituents of the multiple-component composition with water, a polymerization reaction begins and the hydrogel is formed within a time period, the length of which depends on the embodiment of the multiple-component composition. Steps ii) and iii) are preferably conducted at ambient temperatures, for example at a temperature in the range of 0 - 65 °C, preferably 5 - 55 °C, more preferably 5 - 45 °C. The time needed to complete step iii) is typically 10 seconds - 240 minutes, preferably 30 seconds - 120 minutes, more preferably 30 seconds - 90 minutes, even more preferably 30 seconds - 60 minutes, still more preferably 30 seconds - 30 minutes.

Another subject of the present invention is the use of the hydrogel forming composition of the present invention for sealing of constructions, tunnels, or mines or for stabilization of soils.

The use of the hydrogel forming composition of the present invention for sealing of constructions, tunnels, or mines preferably comprises steps of providing the hydrogel forming composition, applying said composition to the site to be sealed/filled in the construction, tunnel, or mine, and letting the composition form a hydrogel.

The use of the hydrogel forming composition of the present invention for stabilization of soils preferably comprises steps of providing the hydrogel forming composition, contacting said composition with the soil, and letting the composition form a hydrogel. The step of contacting the composition with the soil can be conducted by injecting or pumping the composition into the soil or by mixing the soil with the composition.

The step of providing the hydrogel forming composition can comprise steps of providing a multiple-component composition of the present invention and mixing the components of the multiple-component composition with water such that in the thus resulting mixture, the weight ratio of the amount of the at least one water-soluble (meth)acrylic compound to the amount of water is in the range of 0.1:1 to 5:1, preferably, 0.1:1 to 3:1, more preferably 0.2:1 to 2:1. Another subject of the present invention is a method for sealing and/or filling of cracks, voids, flaws and cavities in a building structure, the method comprising steps of:
I) Providing a hydrogel forming composition according to the present invention,
II) Applying the composition to the site to be sealed/filled in the building structure, and
III) Letting the composition to form a hydrogel.

According to one or more embodiments, step I) comprises steps of
I') Providing a multiple-component composition of the present invention and
I") Mixing the components of the multiple-component composition with water such that in the thus resulting mixture, the weight ratio of the amount of the at least one water-soluble (meth)acrylic compound to the amount of water is in the range of 0.2:1 to 2:1

Suitable means for conducting the mixing step I") include static mixers and dynamic mixers, in particular container-stirrer type mixers such as rotor-stator type mixers, dissolver mixers, colloidal mixers and other high shear mixers. The choice of suitable mixing apparatus depends on the open time of the hydrogel forming composition. In case of long open time, the mixing can be conducted with a container equipped with a stirrer whereas in case of short open time, a static mixer is preferably used in mixing. Furthermore, the mixing step I") can also be conducted by manual mixing.

The polymerization reaction starts almost immediately upon mixing of the multiple-component composition and water. Therefore, the step II) should be started soon after provision of the hydrogel forming composition and in any case within the open time of the hydrogel forming composition.

Step III) is preferably conducted at ambient temperatures, for example at a temperature in the range of 0 - 65 °C, preferably 5 - 55 °C, more preferably 5 - 45 °C. The time needed to complete step III) is typically 30 seconds - 240 minutes, preferably 30 seconds - 120 minutes, more preferably 30 seconds - 90 minutes, even more preferably 30 seconds - 60 minutes, still more preferably 30 seconds - 30 minutes.

Also disclosed is a method for stabilization of a soil, the method comprising steps of:
i') Providing a hydrogel forming composition according to the present invention,
ii') Contacting the composition with the soil, and
iii') Letting the composition to form a hydrogel.

According to one or more embodiments, step i') comprises steps of
i") Providing a multiple-component composition and
Mixing the components of the multiple-component composition with water such that in the thus resulting mixture, the weight ratio of the amount of the at least one water-soluble (meth)acrylic compound to the amount of water is in the range of 0.2:1 to 2:1

Step ii') of contacting the hydrogel forming composition with the soil can be conducted by injecting or pumping the composition into the soil or by mixing the soil with the composition.

The polymerization reaction starts almost immediately upon mixing of the multiple-component composition and water. Therefore, the step ii') should be started soon after provision of the hydrogel forming composition and in any case within the open time of the hydrogel forming composition.

Step iii') is preferably conducted at ambient temperatures, for example at a temperature in the range of 0 - 65 °C, preferably 5 - 55 °C, more preferably 5 - 45 °C. The time needed to complete step iii') is typically 30 seconds - 240 minutes, preferably 30 seconds - 120 minutes, more preferably 30 seconds - 90 minutes, even more preferably 30 seconds - 60 minutes, still more preferably 30 seconds - 30 minutes.

Also disclosed is the use of at least one tertiary amine compound for reducing the gelling time of a hydrogel forming mixture, wherein the hydrogel forming mixture comprises at least one water-soluble (meth)acrylic compound, at least one free radical initiator, and water, wherein the at least one tertiary amine compound is the at least one catalyst for free radical formation as described above.

Optionally, the at least one tertiary amine compound is added to the hydrogel forming mixture in an amount of 0.05 - 5.0 wt.-%, preferably 0.1 - 3.5 wt.-%, more preferably 0.1 - 2.5 wt.-%, even more preferably 0.15 - 1.5 wt.-%, still more preferably 0.2 - 1.25 wt.-%, such as 0.25 - 1.0 wt.-%, preferably 0.3 - 1.0 wt.-%, based on the total weight of the hydrogel forming mixture.

Optionally, the at least one tertiary amine compound is selected from the group consisting of trimethylaminoethyl ethanolamine, N,N,N,N-tetramethylethylene diamine, pentamethyldiethylene triamine, 1-methyl-4-(2-dimethylaminoethyl)piperazine, and bis (2-(N,N-dimethylamino)ethyl) ether, preferably from the group consisting of trimethylaminoethyl ethanolamine, N,N,N,N-tetramethylethylene diamine, and pentamethyldiethylene triamine.

Optionally, the at least one tertiary amine compound is selected from the group consisting of trimethylaminoethyl ethanolamine, pentamethyldiethylene triamine, 1-methyl-4-(2-dimethylaminoethyl)piperazine, and bis (2-(N,N-dimethylamino)ethyl) ether, preferably from the group consisting of trimethylaminoethyl ethanolamine and pentamethyldiethylene triamine.

According to the invention, the at least one water-soluble (meth)acrylic compound is present in the hydrogel forming mixture in an amount of 5-70 wt.-%, more preferably 10 - 65 wt.-%, even more preferably 15 - 60 wt.-%, still more preferably 20 - 60 wt.-%, most preferably 25 - 55 wt.-%, based on the total weight of the hydrogel forming mixture. According to one or more further embodiments, the at least one water-soluble (meth)acrylic compound is present in the hydrogel forming mixture in an amount of 25 - 70 wt.-%, more preferably 35 - 65 wt.-%, even more preferably 40 - 65 wt.-%, based on the total weight of the hydrogel forming mixture.

According to one or more embodiments, the hydrogel forming mixture contains not more than 5 wt.-%, preferably not more than 2.5 wt.-%, more preferably not more than 1.5 wt.-%, still more preferably not more than 0.5 wt.-%, most preferably not more than 0.1 wt.-% of (meth)acrylamides, based on the total weight of the hydrogel forming mixture.

According to one or more embodiments, the at least one free-radical initiator is present in the hydrogel forming mixture in an amount of 0.05 - 5.0 wt.-%, preferably 0.1 - 3.5 wt.-%, more preferably 0.1 - 2.5 wt.-%, even more preferably 0.1 - 1.5 wt.-%, still more preferably 0.15 - 1.0 wt.-%, based on the total weight of the hydrogel forming mixture.

According to the invention, the hydrogel forming mixture comprises 20 - 75 wt.-%, more preferably 25 - 65 wt.-%, even more preferably 35 - 55 wt.-% of water.

### Examples

The followings chemicals shown in Table 1 were used in formulating the hydrogel forming compositions.

**Table 1**

| HEMA (Hydroxyethyl methacrylate) | Visiomer HEMA 98, Evonik Industries |
|---|---|
| NAPS (Sodium persulfate, solid) | CAS # 7775-27-1 |
| 2-(Dimethylamino)ethyl methacrylate | CAS # 2867-47-2 |
| Ethanolamine | CAS # 141-43-5 |
| Diethanolamine | CAS # 111-42-2 |
| 2-(2-Dimethylaminoethoxy)ethanol | CAS # 1704-62-7 |
| 1,4-Dimethylpiperazin | CAS # 106-58-1 |
| Bis(2-(N,N-dimethylamino)ethyl) ether | CAS # 3033-62-3 |
| 1-Methyl-4-(2-dimethylaminoethyl)piperazine | CAS # 104-19-8 |
| Pentamethyldiethylenetriamine | CAS # 3030-47-5 |
| N,N,N,N-Tetramethylethylenediamine | CAS # 110-18-5 |
| Trimethylaminoethyl ethanolamin | CAS # 2212-32-0 |

The comparative (Ref-1 to Ref-6) and exemplary (Ex-1 to Ex-5) hydrogel forming compositions and hydrogels were prepared by mixing the ingredients as shown in Table 2 with each other and letting the mixture form hydrogel at standard room temperature (23 °C, 50 % relative humidity). The total weight of the hydrogel forming composition used for preparing each hydrogel specimen was 100 g.

### Gelling time (min)

The gelling time at 23°C was determined by visual inspection (gel time was considered as achieved at the time when gel-like structures were detected).

**Table 2**

| **Compositions [g]** | **Ref-1** | **Ref-2** | **Ref-3** | **Ref-4** | **Ref-5** | **Ex-1** | **Ex-2** | **Ex-3** | **Ex-4** | **Ex-5** |
|---|---|---|---|---|---|---|---|---|---|---|
| HEMA | 49.34 | 49.34 | 49.34 | 49.34 | 49.34 | 49.34 | 49.34 | 49.34 | 49.34 | 49.34 |
| NAPS | 0.66 | 0.66 | 0.66 | 0.66 | 0.66 | 0.66 | 0.66 | 0.66 | 0.66 | 0.66 |
| Water | 49.34 | 49.34 | 49.34 | 49.34 | 49.34 | 49.34 | 49.34 | 49.34 | 49.34 | 49.34 |
| DMAEMA | 0.66 | - | - | - | - | - | - | - | - | - |
| Ethanolamine | - | 0.66 | - | - | - | - | - | - | - | - |
| Diethanolamine | - | - | 0.66 | - | - | - | - | - | - | - |
| 2-(2-Dimethylaminoethoxy)ethanol | - | - | - | 0.66 | - | - | - | - | - | - |
| Dimethylpiperazin | - | - | - | - | 0.66 | - | - | - | - | - |
| Bis(2-(N,N-dimethylamino)ethyl) ether | - | - | - | - | - | 0.66 | - | - | - | - |
| 1-Methyl-4-(2-dimethylaminoethyl)piperazine | - | - | - | - | - | - | 0.66 | - | - | - |
| Pentamethyldiethylenetriamine | - | - | - | - | - | - | - | 0.66 | - | - |
| N,N,N,N-Tetramethylethylenediamine | - | - | - | - | - | - | - | - | 0.66 | - |
| Trimethylaminoethyl ethanolamin | - | - | - | - | - | - | - | - | - | 0.66 |
| Total | 100.0 | 100.0 | 100.0 | 100.0 | 100.0 | 100.0 | 100.0 | 100.0 | 100.0 | 100.0 |
| **Gelling time** | 11min 30s | 1h 46 min | 49min 00s | 10min 15s | 18min 00s | 9min 10s | 8min 50s | 7min 40s | 7min 30s | 7min 30s |

## Claims

1. A hydrogel forming composition comprising:
a) 5 - 70 wt.-% of at least one water-soluble (meth)acrylic compound,
b) At least one free radical initiator,
c) At least one catalyst for free radical formation, and
d) 20 - 75 wt.-% of water, all proportions being based on the total weight of the hydrogel forming composition,
wherein the at least one catalyst for free radical formation is an amine compound of formula (I) 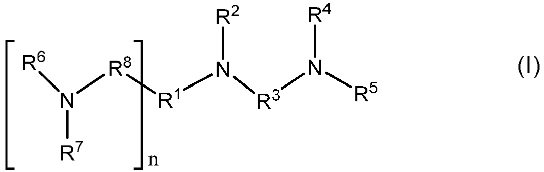 wherein
R¹ to R⁵ represent independently from each other linear or branched alkyl groups having 1 to 6 carbon atoms and optionally having one or more oxygen atoms, and n has a value of 0;
or R¹ to R⁸ represent independently from each other linear or branched alkyl groups having 1 to 6 carbon atoms and optionally having one or more oxygen atoms, and n has a value of 1 ;
or R¹, R², R⁷, and R⁸ together form a 5- or 6-membered ring structure with the two nitrogen atoms, R³ to R⁶ represent independently from each other linear or branched alkyl groups having 1 to 6 carbon atoms and optionally having one or more oxygen atoms, and n has a value of 1,
and wherein the at least one water-soluble (meth)acrylic compound is selected from the group consisting of hydroxyethylmethacrylate (HEMA), hydroxypropylmethacrylate (HPMA), methoxy polyethylene glycol methacrylate (MPEG-MA), polyethylene glycol dimethacrylate (PEG-DMA), maleic acid, itaconic acid, sodium acrylate, sodium methacrylate, potassium acrylate, potassium methacrylate, magnesium acrylate, potassium salt of 3-sulfopropylacrylat, 2-acrylamido-2-methylpropane sulfonic acid, and sodium salt of 2-acrylamido-2-methylpropane sulfonic acid.

2. The hydrogel forming composition according to claim 1, wherein
R³ represents an ethyl group or a diethyl ether group, R⁴ represents a methyl group or an ethyl hydroxide group, R⁵ represents a methyl group, and n has a value of 0;
or R³ represents an ethyl group or a diethyl ether group, R⁴ represents a methyl group or an ethyl hydroxide group, R⁵ and R⁶ represent methyl groups, n has a value of 1, and R¹, R², R⁷, and R⁸ either represent independently from each other linear or branched alkyl groups having 1 to 6 carbon atoms, and optionally having one or more oxygen atoms or R¹, R², R⁷, and R⁸ form a 5- or 6-membered ring structure with the nitrogen atoms.

3. The hydrogel forming composition according to claim 1 or 2, wherein
R³ represents an ethyl group or a diethyl ether group, R⁴ represents a methyl group or an ethyl hydroxide group, R⁵ represents a methyl group, and n has a value of 0;
or R³ represents an ethyl group or a diethyl ether group, R⁴ represents a methyl group or an ethyl hydroxide group, R⁵ and R⁶ represent methyl groups, n has a value of 1, and R² and R⁷ either represent methyl groups and R¹ and R⁸ together form a linear or branched alkyl group having 2 to 6 carbon atoms, preferably an ethyl group or R¹, R², R⁷, and R⁸ together form a 5- or 6-membered ring structure with the two nitrogen atoms.

4. The hydrogel forming composition according to any one of previous claims, wherein the at least one catalyst for free radical formation is selected from the group consisting of trimethylaminoethyl ethanolamine, N,N,N',N'-tetramethylethylene diamine, pentamethyldiethylene triamine, 1-methyl-4-(2-dimethylaminoethyl)piperazine, and bis(2-(N,N-dimethylamino)ethyl) ether.

5. The hydrogel forming composition according to any one of previous claims, wherein the at least one catalyst for free radical formation is present in the hydrogel forming composition in an amount of 0.05 - 5.0 wt.-%, preferably 0.1 - 3.5 wt.-%, based on the total weight of the hydrogel forming composition.

6. The hydrogel forming composition according to any one of previous claims, wherein the at least one water-soluble (meth)acrylic compound is present in the hydrogel forming composition in an amount of 10 - 65 wt.-%, based on the total weight of the hydrogel forming composition.

7. The hydrogel forming composition according to any one of previous claims containing not more than 5 wt.-%, preferably not more than 2.5 wt.-%, of (meth)acrylamides, based on the total weight of the hydrogel forming composition.

8. The hydrogel forming composition according to any one of previous claims, wherein the at least one free-radical initiator is selected from the group consisting of sodium persulfate (NAPS), potassium persulfate, and ammonium persulfate.

9. The hydrogel forming composition according to any one of previous claims, wherein the at least one free-radical initiator is present in the hydrogel forming composition in an amount of 0.05 - 5.0 wt.-%, preferably 0.1 - 3.5 wt.-%, based on the total weight of the hydrogel forming composition.

10. The hydrogel forming composition according to any one or previous claims comprising 25 - 65 wt.-% of water, based on the total weight of the hydrogel forming composition.

11. Use of the hydrogel forming composition according to any one of claims 1-10 for sealing of constructions, tunnels, or mines or for stabilization of soils.

12. A method for sealing and/or filling of cracks, voids, flaws and cavities in a building structure, the method comprising steps of:
I) Providing a hydrogel forming composition according to any of claims 1-10,
II) Applying the composition to the site to be sealed/filled in the building structure, and
III) Letting the composition to form a hydrogel.

## Patentansprüche

1. Hydrogelbildende Zusammensetzung, umfassend:
a) zu 5 - 70 Gew.-% mindestens eine wasserlösliche (Meth)acryl-Verbindung,
b) mindestens einen Radikalinitiator,
c) mindestens einen Katalysator zur Radikalbildung und
d) zu 20 - 75 Gew.-% Wasser, wobei sich alle Anteile auf das Gesamtgewicht der hydrogelbildenden Zusammensetzung beziehen,
wobei der mindestens eine Katalysator zur Radikalbildung eine Aminverbindung der Formel (I) ist: 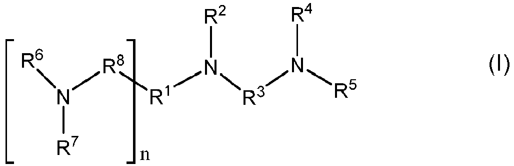 wobei
R¹ bis R⁵ unabhängig voneinander für lineare oder verzweigte Alkylgruppen mit 1 bis 6 Kohlenstoffatomen und gegebenenfalls mit einem oder mehreren Sauerstoffatomen stehen und n einen Wert von 0 hat;
oder R¹ bis R⁸ unabhängig voneinander für lineare oder verzweigte Alkylgruppen mit 1 bis 6 Kohlenstoffatomen und gegebenenfalls mit einem oder mehreren Sauerstoffatomen stehen und n einen Wert von 1 hat;
oder R¹, R², R⁷ und R⁸ zusammen eine 5- oder 6-gliedrige Ringstruktur mit den zwei Stickstoffatomen bilden, R³ bis R⁶ unabhängig voneinander für lineare oder verzweigte Alkylgruppen mit 1 bis 6 Kohlenstoffatomen und gegebenenfalls mit einem oder mehreren Sauerstoffatomen stehen und n einen Wert von 1 hat,
und wobei die mindestens eine wasserlösliche (Meth)acryl-Verbindung ausgewählt ist aus der Gruppe bestehend aus Hydroxyethylmethacrylat (HEMA), Hydroxypropylmethacrylat (HPMA), Methoxypolyethylenglycolmethacrylat (MPEG-MA), Polyethylenglycoldimethacrylat (PEG-DMA), Maleinsäure, Itaconsäure, Natriumacrylat, Natriummethacrylat, Kaliumacrylat, Kaliummethacrylat, Magnesiumacrylat, Kaliumsalz von 3-Sulfopropylacrylat, 2-Acrylamido-2-methylpropansulfonsäure und Natriumsalz von 2-Acrylamido-2-methylpropansulfonsäure.

2. Hydrogelbildende Zusammensetzung nach Anspruch 1, wobei
R³ für eine Ethylgruppe oder eine Diethylethergruppe steht, R⁴ für eine Methylgruppe oder eine Ethylhydroxidgruppe steht, R⁵ für eine Methylgruppe steht und n einen Wert von 0 hat;
oder R³ für eine Ethylgruppe oder eine Diethylethergruppe steht, R⁴ für eine Methylgruppe oder eine Ethylhydroxidgruppe steht, R⁵ und R⁶ für Methylgruppen stehen, n einen Wert von 1 hat, und R¹, R², R⁷ und R⁸ entweder unabhängig voneinander für lineare oder verzweigte Alkylgruppen mit 1 bis 6 Kohlenstoffatomen und gegebenenfalls mit einem oder mehreren Sauerstoffatomen stehen oder R¹, R², R⁷ und R⁸ eine 5- oder 6-gliedrige Ringstruktur mit den Stickstoffatomen bilden.

3. Hydrogelbildende Zusammensetzung nach Anspruch 1 oder 2, wobei
R³ für eine Ethylgruppe oder eine Diethylethergruppe steht, R⁴ für eine Methylgruppe oder eine Ethylhydroxidgruppe steht, R⁵ für eine Methylgruppe steht und n einen Wert von 0 hat;
oder R³ für eine Ethylgruppe oder eine Diethylethergruppe steht, R⁴ für eine Methylgruppe oder eine Ethylhydroxidgruppe steht, R⁵ und R⁶ für Methylgruppen stehen, n einen Wert von 1 hat und entweder R² und R⁷ für Methylgruppen stehen und R¹ and R⁸ zusammen eine lineare oder verzweigte Alkylgruppe mit 2 bis 6 Kohlenstoffatomen, vorzugsweise eine Ethylgruppe, bilden oder R¹, R², R⁷ und R⁸ zusammen eine 5- oder 6-gliedrige Ringstruktur mit den zwei Stickstoffatomen bilden.

4. Hydrogelbildende Zusammensetzung nach einem der vorstehenden Ansprüche, wobei der mindestens eine Katalysator zur Radikalbildung ausgewählt ist aus der Gruppe bestehend aus Trimethylaminoethylethanolamin, N,N,N' ,N'-Tetramethylethylendiamin, Pentamethyldiethylentriamin, 1-Methyl-4-(2-dimethylaminoethyl)piperazin und Bis(2-(N,N-dimethylamino)ethyl)ether.

5. Hydrogelbildende Zusammensetzung nach einem der vorstehenden Ansprüche, wobei der mindestens eine Katalysator zur Radikalbildung in der hydrogelbildenden Zusammensetzung in einer Menge von 0,05 - 5,0 Gew.-%, vorzugsweise 0,1 - 3,5 Gew.-%, bezogen auf das Gesamtgewicht der hydrogelbildenden Zusammensetzung, vorhanden ist.

6. Hydrogelbildende Zusammensetzung nach einem der vorstehenden Ansprüche, wobei die mindestens eine wasserlösliche (Meth)acryl-Verbindung in der hydrogelbildenden Zusammensetzung in einer Menge von 10 - 65 Gew.-%, bezogen auf das Gesamtgewicht der hydrogelbildenden Zusammensetzung, vorhanden ist.

7. Hydrogelbildende Zusammensetzung nach einem der vorstehenden Ansprüche, die zu höchstens 5 Gew.-%, vorzugsweise höchstens 2,5 Gew.-%, (Meth)acrylamide, bezogen auf das Gesamtgewicht der hydrogelbildenden Zusammensetzung, enthält.

8. Hydrogelbildende Zusammensetzung nach einem der vorstehenden Ansprüche, wobei der mindestens eine Radikalinitiator ausgewählt ist aus der Gruppe bestehend aus Natriumpersulfat (NAPS), Kaliumpersulfat und Ammoniumpersulfat.

9. Hydrogelbildende Zusammensetzung nach einem der vorstehenden Ansprüche, wobei der mindestens eine Radikalinitiator in der hydrogelbildenden Zusammensetzung in einer Menge von 0,05 - 5,0 Gew.-%, vorzugsweise 0,1 - 3,5 Gew.-%, bezogen auf das Gesamtgewicht der hydrogelbildenden Zusammensetzung, vorhanden ist.

10. Hydrogelbildende Zusammensetzung nach einem der vorstehenden Ansprüche, umfassend zu 25 - 65 Gew.-% Wasser, bezogen auf das Gesamtgewicht der hydrogelbildenden Zusammensetzung.

11. Verwendung der hydrogelbildenden Zusammensetzung nach einem der Ansprüche 1-10 zum Abdichten von Bauwerken, Tunneln oder Minen oder zur Stabilisierung von Böden.

12. Verfahren zum Abdichten und/oder Füllen von Rissen, Zwischenräumen, Defekten und Hohlräumen in einer Baustruktur, wobei das Verfahren die Schritte umfasst:
I) Bereitstellen einer hydrogelbildenden Zusammensetzung nach einem der Ansprüche 1-10,
II) Aufbringen der Zusammensetzung auf die abzudichtende / zu füllende Stelle in der Baustruktur und
III) Zulassen, dass die Zusammensetzung ein Hydrogel bildet.

## Revendications

1. Composition de formation d'hydrogel comprenant :
a) 5 à 70 % en poids d'au moins un composé (méth)acrylique soluble dans l'eau,
b) au moins un initiateur de radicaux libres,
c) au moins un catalyseur pour la formation de radicaux libres, et
d) 20 à 75 % en poids d'eau, toutes les proportions étant basées sur le poids total de la composition de formation d'hydrogel,
l'au moins un catalyseur pour la formation de radicaux libres étant un composé de type amine de formule (I) 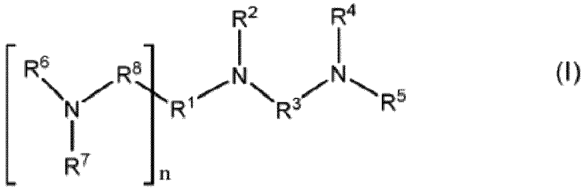
R¹ à R⁵ représentant indépendamment les uns des autres des groupes alkyle linéaires ou ramifiés ayant 1 à 6 atomes de carbone et éventuellement ayant un ou plusieurs atomes d'oxygène, et n ayant une valeur de 0 ;
ou R¹ à R⁸ représentant indépendamment les uns des autres des groupes alkyle linéaires ou ramifiés ayant 1 à 6 atomes de carbone et éventuellement ayant un ou plusieurs atomes d'oxygène, et n ayant une valeur de 1 ;
ou R¹, R², R⁷ ou R⁸ formant ensemble une structure cyclique à 5 ou 6 chaînons avec les deux atomes d'azote, R³ à R⁶ représentant indépendamment les uns des autres des groupes alkyle linéaires ou ramifiés ayant 1 à 6 atomes de carbone et éventuellement ayant un ou plusieurs atomes d'oxygène, et n ayant une valeur de 1,
et l'au moins un composé (méth)acrylique soluble dans l'eau étant choisi dans le groupe constitué par le méthacrylate d'hydroxyéthyle (HEMA), le méthacrylate d'hydroxypropyle (HPMA), un méthacrylate de méthoxy polyéthylène glycol (MPEG-MA), un diméthacrylate de polyéthylène glycol (PEG-DMA), l'acide maléique, l'acide itaconique, l'acrylate de sodium, le méthacrylate de sodium, l'acrylate de potassium, le méthacrylate de potassium, l'acrylate de magnésium, le sel de potassium de 3-sulfopropylacrylate, l'acide 2-acrylamido-2-méthylpropanesulfonique et le sel de sodium de l'acide 2-acrylamido-2-méthylpropanesulfonique.

2. Composition de formation d'hydrogel selon la revendication 1,
R³ représentant un groupe éthyle ou un groupe éther de diéthyle, R⁴ représentant un groupe méthyle ou un groupe hydroxyde d'éthyle, R⁵ représentant un groupe méthyle et n ayant une valeur de 0 ;
ou R³ représentant un groupe éthyle ou un groupe éther de diéthyle, R⁴ représentant un groupe méthyle ou un groupe hydroxyde d'éthyle, R⁵ et R⁶ représentant des groupes méthyle, n ayant une valeur de 1, et R¹, R², R⁷ et R⁸ représentant soit indépendamment les uns des autres des groupes alkyle linéaires ou ramifiés ayant 1 à 6 atomes de carbone et éventuellement ayant un ou plusieurs atomes d'oxygène, soit R¹, R², R⁷ ou R⁸ formant une structure cyclique à 5 ou 6 chaînons avec les atomes d'azote.

3. Composition de formation d'hydrogel selon la revendication 1 ou 2,
R³ représentant un groupe éthyle ou un groupe éther de diéthyle, R⁴ représentant un groupe méthyle ou un groupe hydroxyde d'éthyle, R⁵ représentant un groupe méthyle et n ayant une valeur de 0 ;
ou R³ représentant un groupe éthyle ou un groupe éther de diéthyle, R⁴ représentant un groupe méthyle ou un groupe hydroxyde d'éthyle, R⁵ et R⁶ représentant des groupes méthyle, n ayant une valeur de 1, et soit R² et R⁷ représentant des groupes méthyle et R¹ et R⁸ formant ensemble un groupe alkyle linéaire ou ramifié ayant 2 à 6 atomes de carbone, préférablement un groupe éthyle, soit R¹, R², R⁷ et R⁸ formant ensemble une structure cyclique à 5 ou 6 chaînons avec les deux atomes d'azote.

4. Composition de formation d'hydrogel selon l'une quelconque des revendications précédentes, l'au moins un catalyseur pour la formation de radicaux libres étant choisi dans le groupe constitué par la triméthylaminoéthyléthanolamine, la N,N,N',N'-tétraméthyléthylènediamine, la pentaméthyldiéthylènetriamine, la 1-méthyl-4-(2-diméthylaminoéthyl)pipérazine et l'éther de bis(2-(N,N-diméthylamino)éthyle).

5. Composition de formation d'hydrogel selon l'une quelconque des revendications précédentes, l'au moins un catalyseur pour la formation de radicaux libres étant présent dans la composition de formation d'hydrogel en une quantité de 0,05 à 5,0 % en poids, préférablement de 0,1 à 3,5 % en poids, sur la base du poids total de la composition de formation d'hydrogel.

6. Composition de formation d'hydrogel selon l'une quelconque des revendications précédentes, l'au moins un composé (méth)acrylique soluble dans l'eau étant présent dans la composition de formation d'hydrogel en une quantité de 10 à 65 % en poids, sur la base du poids total de la composition de formation d'hydrogel.

7. Composition de formation d'hydrogel selon l'une quelconque des revendications précédentes ne contenant pas plus de 5 % en poids, préférablement pas plus de 2,5 % en poids, de (méth)acrylamides, sur la base du poids total de la composition de formation d'hydrogel.

8. Composition de formation d'hydrogel selon l'une quelconque des revendications précédentes, l'au moins un initiateur de radicaux libres étant choisi dans le groupe constitué par le persulfate de sodium (NAPS), le persulfate de potassium et le persulfate d'ammonium.

9. Composition de formation d'hydrogel selon l'une quelconque des revendications précédentes, l'au moins un initiateur de radicaux libres étant présent dans la composition de formation d'hydrogel en une quantité de 0,05 à 5,0 % en poids, préférablement de 0,1 à 3,5 % en poids, sur la base du poids total de la composition de formation d'hydrogel.

10. Composition de formation d'hydrogel selon l'une quelconque des revendications précédentes comprenant 25 à 65 % en poids d'eau, sur la base du poids total de la composition de formation d'hydrogel.

11. Utilisation de la composition de formation d'hydrogel selon l'une quelconque des revendications 1 à 10 pour l'étanchéification de constructions, de tunnels ou de mines ou pour la stabilisation de sols.

12. Procédé pour l'étanchéification et/ou le remplissage de fissures, de vides, de failles et de cavités dans une structure de construction, le procédé comprenant les étapes de :
I) fourniture d'une composition de formation d'hydrogel selon l'une quelconque des revendications 1 à 10,
II) application de la composition sur le site devant être scellé/rempli dans la structure de construction, et
III) le fait de laisser la composition former un hydrogel.
